# EUROPÄISCHE PATENTSCHRIFT

(11) **EP 2 637 286 B1**
(45) Veröffentlichungstag und Bekanntmachung des Hinweises auf die Patenterteilung: **30.09.2020**
(21) Anmeldenummer: 13158277.7
(22) Anmeldetag: 08.03.2013
(51) Int. Cl.: H02K 11/30, H02K 7/14, E05F 15/603

(54) **Antrieb für ein Fenster oder dergleichen sowie ein Verfahren zur Montage des Antriebs**
Drive for a window or the like and method for fitting the drive
Entraînement pour fenêtre ou analogue et procédé de montage de l'entraînement

(30) Priorität: 09.03.2012 DE 102012203735
(43) Veröffentlichungstag der Anmeldung: 11.09.2013
(73) Patentinhaber: GEZE GmbH, 71229 Leonberg (DE)
(72) Erfinder: Sattler, Tilman, 71229 Leonberg (DE)

(56) Entgegenhaltungen:
- EP-A1- 1 209 101
- WO-A1-2006/123986
- DE-A1- 4 209 823
- FR-A1- 2 891 414

## Beschreibung

Die Erfindung betrifft einen Antrieb für ein Fenster oder dergleichen nach dem Oberbegriff des Anspruchs 1 sowie ein Verfahren zur Montage des Antriebs nach Anspruch 10.

Die DE 196 17 083 A1 offenbart einen Antrieb für eine Tür, ein Fenster oder dergleichen, mit in einem Gehäuse des Antriebs angeordnetem Elektromotor sowie einer zugeordneten Platine mit einer elektronischen Schaltungsanordnung.

Die Anordnung und Festlegung der Platine in dem Gehäuse des Antriebs sind nicht gezeigt.

Aus der EP 1 209 101 A1 ist eine motorisierte Rolle, mit in einem Gehäuse, mit einem in dem Gehäuse angeordneten Elektromotor sowie mit Antriebsschaltkarten mit einer elektronischen Schaltungsanordnung, wobei die Antriebsschaltkarten in dem Gehäuse angeordnet sind und auf den Elektromotor aufgesteckt sind und sich zwischen dem Elektromotor und einer Endkappe erstrecken.

Aus der DE 195 14 229 A1 ist ein Antrieb für einen Flügel eines Fensters bekannt, mit einem elektrischen Antriebsmotor, welcher eine Antriebsspindel zum Bewegen des Flügels des Fensters antreibt. Im Antriebsgehäuse ist eine Lastabschaltung als elektronische Schaltung auf einer Platine angeordnet, welche an einer Endkappe des Gehäuses fixiert ist.

Größere Platinen sind möglicherweise nicht ausreichend in dem Gehäuse gesichert, so dass es zu einer Berührung leitender Bauteile mit dem Gehäuse kommen könnte.

Der Erfindung liegt die Aufgabe zugrunde, einen Antrieb mit einer einfachen und zuverlässigen Anordnung einer elektronischen Schaltung in dem Antrieb und mit einer einfachen Montage zu schaffen.

Die Aufgabe wird durch die Merkmale des Anspruchs 1 sowie des Anspruchs 7 gelöst.

Die Unteransprüche bilden vorteilhafte Ausgestaltungsmöglichkeiten der Erfindung.

Antriebe für Flügel von Fenstern sind in an sich bekannter Weise zum Schwenken des Flügels zwischen einer Offenstellung und einer Geschlossenstellung des Flügels vorgesehen. Der Antrieb kann beispielsweise als Spindelantrieb ausgebildet sein und ist mit einer Konsole alternativ am Flügel oder einem den Flügel umgebenden Blendrahmen schwenkbeweglich gelagert. Die erfindungsgemäße Anordnung kann jedoch auch bei anderen Antrieben, wie einem Kettenantrieb oder einem Verrieglungsantrieb, Anwendung finden.

Der Antrieb umfasst ein Gehäuse, in dem ein Abtriebselement, beispielsweise eine Spindel, eine Kette oder Schubelement, angeordnet ist, das mit einem Elektromotor betätigbar ist. Der Antrieb weist eine auf einer Platine angeordnete elektronische Schaltungsanordnung auf, die vorteilhaft einfach und zuverlässig in einem Platinenhalter angeordnet ist.

Der Platinenhalter weist einerends eine Stirnplatte auf, welche den ansonsten zylindrischen Platinenhalter in dem Gehäuse des Antriebs gegen Verdrehen sichert und die als Anlage an einer Endkappe dient, welche das Gehäuse stirnseitig verschließt und zur Durchführung einer Anschlussleitung vorgesehen ist. An der Stirnplatte sind Aussparungen für einen Steckverbinder der Anschlussleitung oder für den Zugriff auf Einstellelemente, beispielsweise einen Drehschalter oder DIP-Schalter, die zur Auswahl von Parametern des Antriebs vorgesehen sind.

Am zylindrischen Teil des Platinenhalters ist andernends gegenüber der Stirnplatte ein Aufnahmering ausgebildet, welcher zur Aufnahme am Elektromotor ausgebildet ist. Der Aufnahmering ist mit Schlitzen versehen, welche den Aufnahmering in Segmente unterteilt, wodurch die Segmente elastisch federnd sind. Es sind am Aufnahmering Anlagenasen sowie Rastnasen angeordnet, wobei die Rastnasen mit Rastausnehmungen am Elektromotor korrespondieren. Die Anlagenasen begrenzen die Einschubtiefe des Elektromotors, indem diese mit der Stirnseite des Elektromotors in Anlage kommen. Vorteilhaft besteht so ein definierter Abstand des Elektromotors zu der im Platinenhalter angeordneten Platine, so dass vorgesehene Sensoren, beispielsweise für eine Drehzahlerfassung, aus der sich eine Position des Abtriebselements ermitteln lässt, korrespondierend anordenbar sind.

Zur Anordnung der Platine im Platinenhalter sind einander gegenüberliegende Führungsnuten vorgesehen, welche vorteilhaft in ihrem Verlauf durch beiderseits der Führungsnut angeordnete Stege zur sicheren Führung der Platine vertieft sind. Am Platinenhalter ist beidseitig eine L-förmige Ausnehmung vorgesehen, wodurch ein elastisch federnder Steg gebildet ist. Da auf Innenseite dieser Federstege jeweils eine der Führungsnuten für die Platine angeordnet ist, wird die Platine beim Einschieben in die Führungsnuten in deren Endbereich durch Klemmung fixiert. Dabei ist die Spannung der Federstege durch die Materialstärke und die Ausbildung der L-förmigen Ausnehmung konstruktiv so gewählt, dass sich die Platine problemlos einschieben lässt, jedoch auch ausreichend durch die Klemmung gesichert ist.

Der Platinenhalter ermöglicht eine einfache und zuverlässige Montage des Antriebs. Nach Einsetzen der Platine in die Führungsnut des Platinenhalters und vollständigem Einschieben ist die Platine bereits sicher im Platinenhalter aufgenommen. Anschließend erfolgt das Aufstecken des Platinenhalters mit der Platine auf den Elektromotor, wodurch eine exakte Verbindung zum Elektromotor hergestellt wird. Nach Kontaktieren der Anschlussleitung und gegebenenfalls der Auswahl bzw. Änderung von Parametern des Antriebs, soweit diese nicht bereits vor Einsetzen der Platine eingestellt wurden, wird der Antrieb durch Befestigen der Endkappe am Gehäuse fertiggestellt.

Im Nachfolgenden wird ein Ausführungsbeispiel in der Zeichnung anhand der Figuren näher erläutert.

Dabei zeigen:
- Fig. 1: einen Antrieb mit teilweise geschnittenem Gehäuse im Bereich des Elektromotors und des Platinenhalters;
- Fig. 2: den Platinenhalter in einer ersten Ansicht im Schrägbild;
- Fig. 3: eine weitere Ansicht des Platinenhalters gemäß Fig. 2 im Schrägbild;
- Fig. 4: einen Ausschnitt des Platinenhalters und des Elektromotors des Antriebs gemäß Fig. 1;
- Fig. 5: einen Ausschnitt des Platinenhalters und des Elektromotors gemäß Fig. 4 wobei der Platinenhalter auf den Elektromotor aufgesteckt ist;
- Fig. 6: eine weitere Ansicht des Platinenhalters gemäß Fig. 2 im Schrägbild;
- Fig. 7: eine Seitenansicht des Platinenhalters gemäß Fig. 2;
- Fig. 8: eine Ansicht auf den Platinenhalter mit teilweise eingeschobener Platine im Schrägbild.

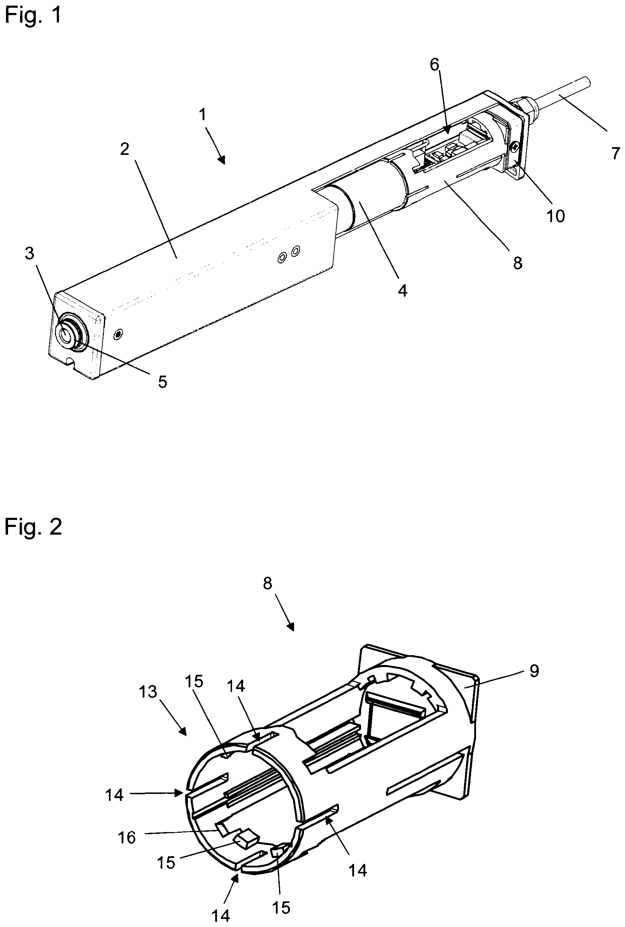

In Fig. 1 ist ein Antrieb 1 für einen Flügel eines hier nicht weiter dargestellten Fensters gezeigt, der in an sich bekannter Weise zum Schwenken des Flügels zwischen einer Offenstellung und einer Geschlossenstellung des Flügels vorgesehen ist. Der Antrieb 1 ist hier als Spindelantrieb ausgebildet und kann, hier nicht dargestellt, mit einer Konsole alternativ am Flügel oder einem den Flügel umgebenden Blendrahmen schwenkbeweglich gelagert sein.

Der Antrieb 1 weist ein Gehäuse 2 auf, in dem eine Spindel 3 gelagert ist, welche mittels eines Elektromotors 4 antreibbar ist. Die Spindel 3 ist von einer mit einer Spindelmutter versehenen Schubstange 5 umgeben, welcher, je nach Montageweise des Antriebs 1 am Blendrahmen oder am Flügel schwenkbeweglich abgestützt ist.

Der Antrieb 1 weist weiterhin eine elektronische Schaltungsanordnung auf, die sich auf einer Platine 6 befindet, an welcher auch der Anschluss des Antriebs 1 mittels der Anschlussleitung 7 erfolgt. Die Platine 6 ist vorteilhaft einfach und zuverlässig in einem Platinenhalter 8 angeordnet.

In den Fig. 2, 3 und 6 ist der Platinenhalter 8 als Einzelteil ohne eingesetzte Platine 6 gezeigt. Einerends weist der Platinenhalter 8 stirnseitig eine im Wesentlichen den inneren Abmessungen des Gehäuses 2 angepasste Stirnplatte 9 auf, welche den ansonsten zylindrischen Platinenhalter 8 in seiner Lage gegen Verdrehen sichert. Die Stirnplatte 9 kann weiterhin zur Anlage des Platinenhalters 8 an einer Endkappe 10 vorgesehen sein, welche am Gehäuse 2 festgelegt ist und durch welche die Anschlussleitung 7 geführt ist. Die Stirnplatte 9 weist eine rechteckige Aussparung 11 für den Durchgriff einer Steckverbindung für die Anschlussleitung 7 und eine runde Aussparung 12 auf, welche den Zugriff auf einen Drehschalter auf der Platine 6 ermöglicht, der zur Auswahl von Parametern des Antriebs 1, wie den Hub der Schubstange 5, vorgesehen ist.

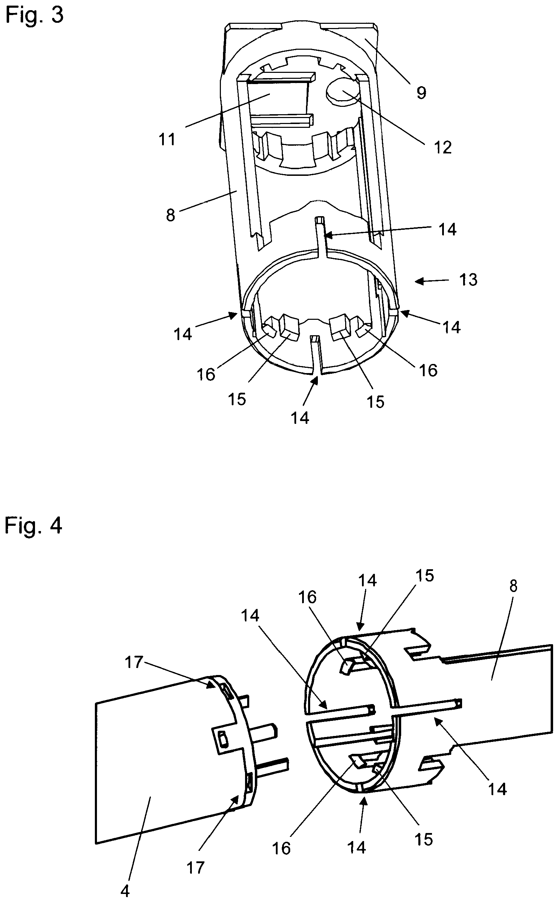

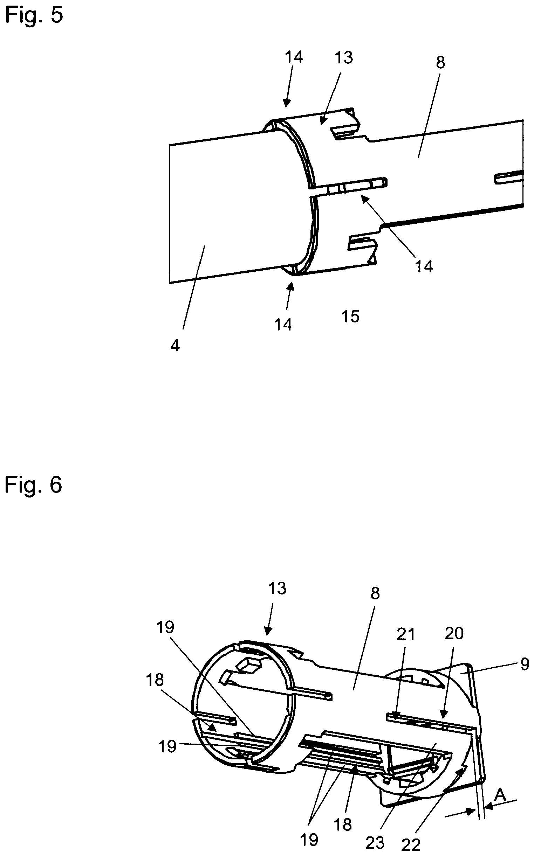

Am zylindrischen Teil des Platinenhalters 8 ist andernends gegenüber der Stirnplatte 9 ein Aufnahmering 13 für die Ankopplung des Elektromotors 4 vorgesehen, welcher den Elektromotor 4 umfasst, wie es in den Fig. 4 und 5 gezeigt ist. Am Aufnahmering 13 sind Schlitze 14 angeordnet, welche den Aufnahmering 13 in Segmente unterteilt, welche aufgrund der Schlitze 14 elastisch federnd sind. Weiterhin sind am Aufnahmering 13 Anlagenasen 15 sowie Rastnasen 16 vorgesehen, welche mit Rastausnehmungen 17 am Elektromotor 4 korrespondieren. Jedes Segment weist vorteilhaft eine Anlagenase 15 und eine Rastnase 16 auf. Fig. 5 zeigt den mit dem Platinenhalter 8 verbundenen Elektromotor 4.

Vorteilhaft besteht durch die Anlagenasen 15 eine definierte Lage zum Elektromotor 4, so dass beispielsweise ein auf der Welle des Elektromotors 4 angebrachter Magnet direkt mit der auf der Platine 6 angeordneten Schaltungsanordnung einen Inkrementalgeber bilden kann, wodurch die Position der Schubstange 5 und somit die Stellung des Flügels des Fensters erfassbar ist.

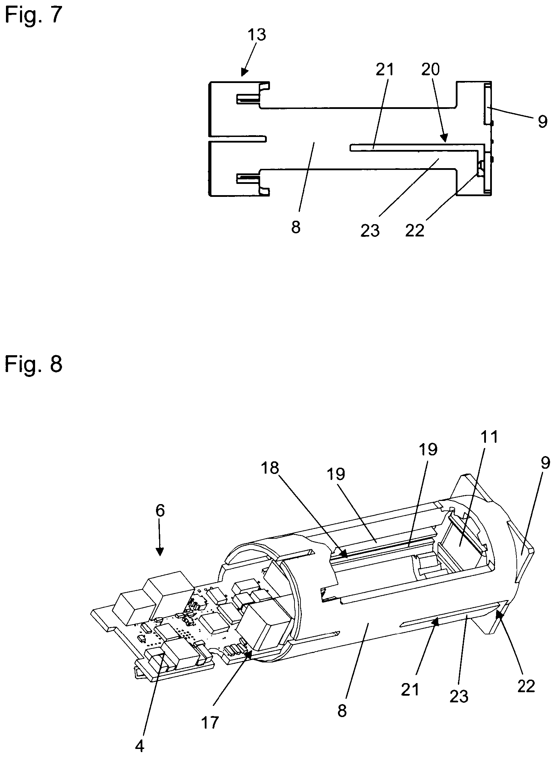

Zur Anordnung der Platine 6 ist im Platinenhalter 8 einander gegenüberliegend jeweils eine Führungsnut 18 vorgesehen, welche in ihrem Verlauf durch beiderseits der Führungsnut 18 angeordnete Stege 19 vertieft ist, um eine zuverlässige Abstützung der Platine 6 zu gewährleisten, wie es in den Fig. 6 bis 8 gezeigt ist. Der Platinenhalter 8 weist vorteilhaft beidseitig eine L-förmige Ausnehmung 20 auf, welche sich mit ihrem langen Schenkel 21 etwa ab der Mitte der Längserstreckung des Platinenhalters 8 bis hin zur Stirnplatte 9 hin erstreckt und deren kurzer Schenkel 22 sich im rechten Winkel zum langen Schenkel 21 parallel entlang der Stirnplatte 9 erstreckt. Konstruktiv bedingt kann sich so der entstandene Federsteg 23, auf dessen Innenseite die Führungsnut 18 angeordnet ist, elastisch verformen. Insbesondere federt der Federsteg 23 im Bereich der Ecke am Übergang des langen Schenkels 21 zum kurzen Schenkel 22, wie es in der Fig. 6, Abstand A gezeigt ist.

Der Abstand der Führungsnuten 18 ist im Bereich des Aufnahmerings 13 so dimensioniert, dass dieser etwas größer ist als die Breite der Platine 6, so dass sich diese anfänglich leicht in den Platinenhalter 8 einsetzen und einschieben lässt. Im Bereich der Federstege 23 ist der Abstand der Führungsnuten 18 geringer, so dass die Platine 6 die elastisch federnden Federstege 23 beim Einschieben spreizt, wodurch die Platine 6 in den Führungsnuten 18 durch die Klemmwirkung gesichert aufgenommen ist. Die Platine 6 ist elektrisch sicher vom Gehäuse 2 beabstandet aufgenommen.

Die Montage des Antriebs 1 kann durch den Platinenhalter 8 einfach und zuverlässig erfolgen. Zunächst wird die Platine 6 in den Platinenhalter 8 in die Führungsnut 18 eingesetzt und durch vollständiges Einschieben bis zur Stirnplatte 9 gesichert. Sodann wird die Platine 6 mit dem Platinenhalter 8 stirnseitig auf den Elektromotor 4 so weit aufgeschoben, dass der Elektromotor 4 mit dem Platinenhalter 8 verrastet, wonach die Einheit in das Gehäuse 2 des Antriebs 1 eingeführt wird. Zur Herstellung der elektrischen Verbindung können dabei am Elektromotor 4 Kontaktstifte angeordnet sein, welche in zugeordnete Buchsen auf der Platine 6 eingreifen. Alternativ kann auch eine entsprechende Verbindung über Anschlussdrähte und eine Steckverbindung hergestellt werden. Die Endkappe 10 mit der Anschlussleitung 7 wird an die Stirnplatte 9 des Platinenhalters 8 herangeführt und die Anschlussleitung 7 mittels Steckverbinder durch die Aussparung 11 mit der Platine 6 kontaktiert. Weiterhin können auch noch Einstellungen am auf der Platine angeordneten Wahlschalter, welcher durch die Aussparung 12 zugänglich ist, durchgeführt werden. Zuletzt erfolgt durch Einsetzen und Festlegen der Endkappe 10 am Gehäuse 2 die Fertigstellung des Antriebs 1.

### Liste der Referenzzeichen

- 1: Antrieb
- 2: Gehäuse
- 3: Spindel
- 4: Elektromotor
- 5: Schubstange
- 6: Platine
- 7: Anschlussleitung
- 8: Platinenhalter
- 9: Stirnplatte
- 10: Endkappe
- 11: Aussparung
- 12: Aussparung
- 13: Aufnahmering
- 14: Schlitz
- 15: Anlagenase
- 16: Rastnase
- 17: Rastausnehmung
- 18: Führungsnut
- 19: Steg
- 20: Ausnehmung
- 21: Schenkel
- 22: Schenkel
- 23: Federsteg

## Patentansprüche

1. Antrieb (1) für ein Fenster oder dergleichen, mit in einem Gehäuse (2), mit einem in dem Gehäuse (2) angeordneten Elektromotor (4) sowie mit einer zugeordneten Platine (6) mit einer elektronischen Schaltungsanordnung, wobei die Platine (6) in einem Platinenhalter (8) angeordnet ist, wobei der Platinenhalter (8) auf den Elektromotor (4) aufgesteckt ist und sich zwischen dem Elektromotor (4) und einer Endkappe (10) erstreckt,
wobei
- der Platinenhalter (8) mechanisch an dem Elektromotor (4) befestigt ist,
- die Platine (6) in Führungsnuten (18) des Platinenhalters (8) eingesetzt ist,
- die Platine (6) in das Gehäuse des Antriebs (1) eingeführt ist,
**dadurch gekennzeichnet, dass**
- die Platine (6) in den Platinenhalter (8) unter Aufspreizen eines Federstegs (23) vollständig eingeschoben ist,
- der Platinenhalter (8) einen Aufnahmering (13) mit Rastnasen (16) aufweist, wobei der Aufnahmering (13) auf den Elektromotor (4) aufgeschoben ist und die Rastnasen (16) des Aufnahmerings (13) mit Rastnasen (17) des Elektromotors (4) einrasten,
- die Endkappe (10) mit einer Anschlussleitung (7) an das Gehäuse (2) herangeführt und die Anschlussleitung (7) mit der Platine (6) kontaktiert ist und
- die Endkappe (10) am Gehäuse (2) des Antriebs (1) eingesetzt und festgelegt ist.

2. Antrieb nach Anspruch 1,
**dadurch gekennzeichnet, dass** am Aufnahmering (13) Schlitze (14) angeordnet sind, welche den Aufnahmering (13) in elastisch federnde Segmente unterteilen.

3. Antrieb nach Anspruch 2,
**dadurch gekennzeicnet,** dass wenigstens ein Segment mindestens eine Anlagenase (15) und/oder mindestens eine Rastnase (16) aufweist.

4. Antrieb nach Anspruch 1,
**dadurch gekennzeichnet, dass** die Führungsnut (18) durch beiderseits der Führungsnut (18) angeordnete Stege (19) zur Abstützung der Platine (6) vertieft ist.

5. Antrieb nach Anspruch 1,
**dadurch gekennzeichnet, dass** der Federsteg (23) durch eine Ausnehmung (20) mit einem ersten Schenkel (21) und einem zweiten Schenkel (22) am Platinenhalter (8) gebildet ist.

6. Antrieb nach Anspruch 5,
**dadurch gekennzeichnet, dass** die Führungsnut (18) auf der Innenseite jedes Federstegs (23) angeordnet ist, so dass die Platine (6) die Federstege (23) beim Einschieben elastisch spreizt.

7. Verfahren zur Montage eines Antriebs nach Anspruch 1,
**gekennzeichnet durch,**
- Einsetzen der Platine (6) in die Führungsnuten (18) des Platinenhalters (8);
- vollständiges Einschieben der Platine (6) in den Platinenhalter (8) unter Aufspreizen der Federstege (23);
- Aufschieben des Aufnahmerings (13) des Platinenhalters (8) auf den Elektromotor (4) und Einrasten der Rastnasen (16) des Aufnahmerings (13) mit den Rastausnehmungen (17) des Elektromotors (4);
- Einführen in das Gehäuse (2) des Antriebs (1);
- Heranführen der Endkappe (10) mit der Anschlussleitung (7) an das Gehäuse (2) und Kontaktieren der Anschlussleitung (7) mit der Platine (6);
- Einsetzen und Festlegen der Endkappe (10) am Gehäuse (2) des Antriebs (1).

## Claims

1. Drive (1) for a window or the like, having a housing (2), having an electric motor (4), which is arranged in the housing (2), and having an associated circuit board (6) with an electronic circuit arrangement,
wherein the circuit board (6) is arranged in a circuit-board holder (8), wherein the circuit-board holder (8) is fitted onto the electric motor (4) and extends between the electric motor (4) and an end cap (10),
wherein
- the circuit-board holder (8) is fastened mechanically on the electric motor (4),
- the circuit board (6) is inserted into guide grooves (18) of the circuit-board holder (8),
- the circuit board (6) is introduced into the housing of the drive (1),
**characterized in that**
- the circuit board (6) is pushed all the way into the circuit-board holder (8), a resilient crosspiece (23) being expanded in the process,
- the circuit-board holder (8) has an accommodating ring (13) with latching lugs (16), wherein the accommodating ring (13) is pushed onto the electric motor (4) and the latching lugs (16) of the accommodating ring (13) latch with latching apertures (17) of the electric motor (4),
- the end cap (10), with a connection line (7), is guided onto the housing (2) and the connection line (7) is brought into contact with the circuit board (6), and
- the end cap (10) is inserted, and secured, on the housing (2) of the drive (1).

2. Drive according to Claim 1,
**characterized in that** the accommodating ring (13) is provided with slits (14) which subdivide the accommodating ring (13) into elastically resilient segments.

3. Drive according to Claim 2,
**characterized in that** at least one segment has at least one abutment lug (15) and/or at least one latching lug (16).

4. Drive according to Claim 1,
**characterized in that** the guide groove (18) is provided in a recessed state by way of crosspieces (19) arranged on either side of the guide groove (18), for the purpose of supporting the circuit board (6).

5. Drive according to Claim 1,
**characterized in that** the resilient crosspiece (23) is formed on the circuit-board holder (8) by an aperture (20) with a first leg (21) and a second leg (22).

6. Drive according to Claim 5,
**characterized in that** the guide groove (18) is arranged on the inner side of each resilient crosspiece (23), and therefore the circuit board (6) expands the resilient crosspieces (23) elastically as it is being pushed in.

7. Method for installing a drive according to Claim 1,
**characterized by**
- the circuit board (6) being inserted into the guide grooves (18) of the circuit-board holder (8) ;
- the circuit board (6) being pushed all the way into the circuit-board holder (8), the resilient crosspieces (23) being expanded in the process;
- the accommodating ring (13) of the circuit-board holder (8) being pushed onto the electric motor (4) and the latching lugs (16) of the accommodating ring (13) latching with the latching apertures (17) of the electric motor (4) ;
- introduction into the housing (2) of the drive (1) ;
- the end cap (10), with the connection line (7), being guided onto the housing (2) and the connection line (7) being brought into contact with the circuit board (6); and
- the end cap (10) being inserted, and secured, on the housing (2) of the drive (1).

## Revendications

1. Mécanisme d'entraînement (1) pour une fenêtre ou similaire, comprenant un boîtier (2), comprenant un moteur électrique (4) disposé dans le boîtier (2) et comprenant aussi une platine (6) associée avec un arrangement de circuit électronique, la plaque (6) étant disposée dans un porte-platine (8), le porte-platine (8) étant enfiché sur le moteur électrique (4) et s'étendant entre le moteur électrique (4) et un cache d'extrémité (10),
- le porte-platine (8) étant fixé mécaniquement au moteur électrique (4),
- la platine (6) étant montée dans des rainures de guidage (18) du porte-platine (8),
- la platine (6) étant introduite dans le boîtier du mécanisme d'entraînement (1),
**caractérisé en ce que**
- la platine (6) est entièrement insérée dans le porte-platine (8) par écartement d'une barrette à ressort (23),
- le porte-platine (8) possède une bague d'accueil (13) munie de tenons d'encliquetage (16), la bague d'accueil (13) étant emmanchée sur le moteur électrique (4) et les tenons d'encliquetage (16) de la bague d'accueil (13) s'encliquetant avec des cavités d'encliquetage (17) du moteur électrique (4),
- le cache d'extrémité (10) muni d'une ligne de raccordement (7) est approché du boîtier (2) et la ligne de raccordement (7) est mise en contact avec la platine (6) et
- le cache d'extrémité (10) est monté et fixé sur le boîtier (2) du mécanisme d'entraînement (1).

2. Mécanisme d'entraînement selon la revendication 1, **caractérisé en ce que** des fentes (14) sont disposées au niveau de la bague d'accueil (13), lesquelles subdivisent la bague d'accueil (13) en segments à flexibilité élastique.

3. Mécanisme d'entraînement selon la revendication 2, **caractérisé en ce qu'**au moins un segment possède au moins un tenon d'appui (15) et/ou au moins un tenon d'encliquetage (16) .

4. Mécanisme d'entraînement selon la revendication 1, **caractérisé en ce que** la rainure de guidage (18) est approfondie par des nervures (19) disposées des deux côtés de la rainure de guidage (18) servant à soutenir la platine (6).

5. Mécanisme d'entraînement selon la revendication 1, **caractérisé en ce que** la barrette à ressort (23) est formée par une ouverture (20) avec une première branche (21) et une deuxième branche (22) au niveau du porte-platine (8).

6. Mécanisme d'entraînement selon la revendication 5, **caractérisé en ce que** la rainure de guidage (18) est disposée sur le côté intérieur de chaque barrette à ressort (23), de sorte que la platine (6) écarte élastiquement les barrettes à ressort (23) lors de l'insertion.

7. Procédé de montage d'un mécanisme d'entraînement selon la revendication 1, **caractérisé par**
- montage de la platine (6) dans les rainures de guidage (18) du porte-platine (8) ;
- insertion complète de la platine (6) dans le porte-platine (8) par écartement des barrettes à ressort (23) ;
- emmanchement de la bague d'accueil (13) du porte-platine (8) sur le moteur électrique (4) et encliquetage des tenons d'encliquetage (16) de la bague d'accueil (13) avec les cavités d'encliquetage (17) du moteur électrique (4) ;
- introduction dans le boîtier (2) du mécanisme d'entraînement (1) ;
- approche du cache d'extrémité (10) muni de la ligne de raccordement (7) du boîtier (2) et mise en contact de la ligne de raccordement (7) avec la platine (6) ;
- montage et fixation du cache d'extrémité (10) sur le boîtier (2) du mécanisme d'entraînement (1).
